# EUROPEAN PATENT SPECIFICATION

(11) **EP 3 855 301 B1**
(45) Date of publication and mention of the grant of the patent: **28.10.2026**
(21) Application number: 20210016.0
(22) Date of filing: 26.11.2020
(51) Int. Cl.: G06F 3/0488, G06F 3/0481, G06F 3/0486, G06F 3/0484

(54) **DISPLAY CONTROL PROGRAM, DISPLAY CONTROL METHOD, AND DISPLAY CONTROLLER**
ANZEIGESTEUERPROGRAMM, ANZEIGESTEUERVERFAHREN UND ANZEIGESTEUERGERÄT
PROGRAMME DE COMMANDE D'AFFICHAGE, PROCÉDÉ DE COMMANDE D'AFFICHAGE ET ORGANE DE COMMANDE

(30) Priority: 27.01.2020 JP 2020011006
(43) Date of publication of application: 28.07.2021
(73) Proprietor: Fujitsu Limited, Kawasaki-shi, Kanagawa 211-8588 (JP)
(72) Inventor: Nakajima, Kenji, Kawasaki-shi, Kanagawa 211-8588 (JP); Akiyama, Katsuhiko, Kawasaki-shi, Kanagawa 211-8588 (JP); Uyama, Masashi, Kawasaki-shi, Kanagawa 211-8588 (JP)
(74) Representative: Hoffmann Eitle

(56) References cited:
- JP-A- H06 176 120
- US-A1- 2008 068 345
- US-A1- 2013 346 910
- US-A1- 2014 195 957
- US-A1- 2015 007 100

## Description

### FIELD

The embodiment discussed herein is related to a display control program, a display control method, and a display controller.

### BACKGROUND

A technique of the related art is disclosed in which a user may draw a character or the like on a display object such as, for example, a virtual sticker note by a user operation using a pen-type device, or move the position of the display object.

The display object is moved in response to an operation such as dragging when a system mode setting is set to a move mode, and is drawn in response to an operation such as dragging when the mode setting is set to a drawing mode (an edit mode or an input mode).

Related techniques are disclosed in, for example, Japanese Laid-Open Patent Publication No. 2012-198798.

US 2014/0195957 A1 describes an image display device including a touchscreen display configured to display information; a controller configured to display a touch input window with a predetermined transparency while maintaining the information displayed on the touchscreen display based on a received request, the touch input window including a pad region for controlling a pointer displayed on the touchscreen display, move the pointer displayed on the touchscreen display in accordance with a touch movement on the mouse pad region, select and execute an application corresponding to a display object displayed on the touchscreen display when the pointer is displayed on the display object and an execute command is received, and select and execute the application corresponding to the display object when the pointer is not displayed on the display object and a touch direct input of the display object is received.

US 2015/0007100 A1 describes an electronic device and a method said to be adapted to identify window control commands in a multi-window system. The electronic device displays multiple windows each respectively having a title bar on a touch interface. The electronic device executes the method to identify a window control command according to a touch gesture from a movement of a touch point detected on the title bar of one of the windows. This is said to allow the user to easily touch the title bar to operate a certain window.

US 2008/0068345 A1 describes an information processing apparatus for data input, which is said to allow input and editing to be performed through a simple operation. The apparatus having a coordinate input device and a display device and being operable in a drawing mode and an editing mode. The apparatus includes determination means for determining whether a change in coordinate data has occurred while drawing processing is being executed based upon coordinate data that has been input from the coordinate input device in the drawing mode, and control means for exercising control so as to transition to the editing mode if the determination means has determined that a state in which there is no change in coordinate data has continued for a preset period of time.

US 2013/0346910 A1 describes a digital whiteboard on which different drawing regions are opened for different users. Each drawing region has its own set of line appearance properties, which the user can set with a toolbar. Lines drawn in a drawing region adopt the line appearance properties then in effect for that drawing region, which also apply to replications of the line on other devices in the collaboration session. As the user draws toward a boundary of the user's drawing region, the boundary automatically moves so that the drawing continues to contain the user's drawing activity.

JP H06 176120 A describes an editing mode graphic for defining a closed area being inputted in relation to an object. When the editing mode graphic is inputted, an editing mode area is formed there. When the pen is put down on the editing mode area and is moved as it is, the object displayed in relation to the editing mode area is moved to a prescribed position with the shift of the pen.

However, in the technique of the related art described in Japanese Laid-Open Patent Publication No. 2012-198798, for example, when the user moves the display object of the drawing mode, a complicated operation is required to perform an operation for switching the mode setting set in the display object to the move mode, and then perform an operation such as dragging.

According to an aspect, an object of the present disclosure is to allow a user to perform both drawing and moving of a display object without explicitly switching between a drawing mode and a move mode.

### SUMMARY

The invention is disclosed by the independent claims. Further preferred embodiments are disclosed in the dependent claims. According to an aspect of the embodiment, a display control program causes a computer to execute a process, the process comprising: when a processing mode is a drawing mode, receiving an operation position instruction started in a drawing region; and changing the processing mode to a move mode of moving the drawing region according to movement of an operation position indicated by the operation position instruction to a predetermined region with a side that forms the drawing region as a reference while the operation position instruction is continued.

According to one aspect, it is possible to allow a user to perform both drawing and moving of a display object without explicitly switching between a drawing mode and a move mode.

### BRIEF DESCRIPTION OF DRAWINGS

FIG. 1 is a diagram illustrating a hardware configuration example of an information processing apparatus according to an embodiment;
FIG. 2 is a diagram illustrating an example of the functional configuration of the information processing apparatus according to the embodiment;
FIG. 3 is a flowchart illustrating an example of a process executed in the information processing apparatus according to the embodiment;
FIG. 4A is a diagram illustrating a process executed in the information processing apparatus according to the embodiment;
FIG. 4B is a diagram illustrating a process executed in the information processing apparatus according to the embodiment;
FIG. 4C is a diagram illustrating a process executed in the information processing apparatus according to the embodiment; and
FIG. 4D is a diagram illustrating a process executed in the information processing apparatus according to the embodiment.

### DESCRIPTION OF EMBODIMENT

Hereinafter, an embodiment of the present disclosure will be described with reference to the drawings.

### <Hardware Configuration>

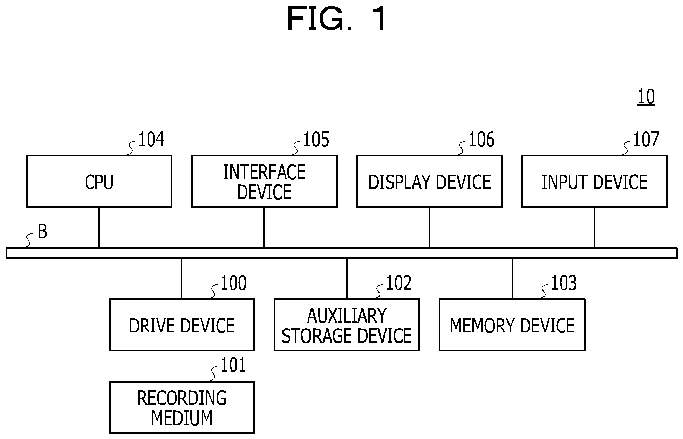

FIG. 1 is a diagram illustrating a hardware configuration example of an information processing apparatus 10 according to an embodiment. The information processing apparatus 10 is, for example, a computer such as a tablet (slate PC), a smartphone, a personal computer, a server, or the like. When the information processing apparatus 10 is a server, the information processing apparatus 10 may be connected to a terminal having a display device 106, an input device 107, and the like via a communication network, for example, a carrier network such as the Internet and 5G, a wireless LAN (Local Area Network), a LAN, or the like.

The information processing apparatus 10 of FIG. 1 includes a drive device 100, an auxiliary storage device 102, a memory device 103, a CPU 104, an interface device 105, a display device 106, an input device 107, and the like, which are interconnected by a bus B.

A program (drawing program) for implementing a process in the information processing apparatus 10 is provided by a recording medium 101. When the recording medium 101 recording the program is set in the drive device 100, the program is installed in the auxiliary storage device 102 from the recording medium 101 via the drive device 100. However, it is not always necessary to install the program from the recording medium 101, but the program may be downloaded from another computer via a network. The auxiliary storage device 102 stores the installed program and also stores necessary files and data.

When an instruction to activate the program is given, the memory device 103 reads and stores the program from the auxiliary storage device 102. The CPU 104 implements a function related to the information processing apparatus 10 according to the program stored in the memory device 103. The interface device 105 is used as an interface for connecting to the network.

The display device 106 is a display that displays a GUI (Graphical User Interface) and the like according to a program. The display device 106 may be, for example, a touch panel, a liquid crystal display, a projector, or the like.

The input device 107 receives an input of various operation instructions. The input device 107 includes, for example, a pointing device that receives an input of a position (coordinates on a screen) designated by a user. In this case, the input device 107 may be, for example, a touch panel of a capacitance type touch or the like that detects a position touched by a user's finger or a stylus pen, and a touch pad. Alternatively, the input device 107 may be, for example, a mouse, a trackball, or the like. In addition, the input device 107 may be, for example, an input system in which a pen-type device emits an infrared ray or the like when coming into contact with a wall surface or the like on which a display screen is projected by a projector, and detects a contacted position with an infrared sensor or the like.

In addition, an example of the recording medium 101 may include a portable recording medium such as a CD-ROM, a DVD disc, a USB memory, or the like. Further, an example of the auxiliary storage device 102 may include an HDD (Hard Disk Drive), a flash memory, or the like. Both the recording medium 101 and the auxiliary storage device 102 correspond to a computer-readable recording medium.

### <Functional Configuration>

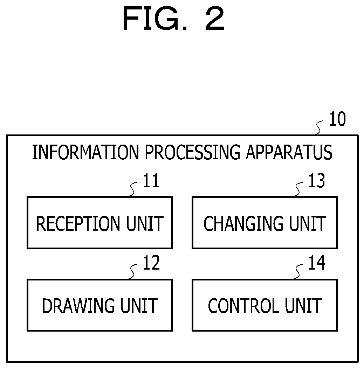

Next, the functional configuration of the information processing apparatus 10 according to the embodiment will be described with reference to FIG. 2. FIG. 2 is a diagram illustrating an example of the functional configuration of the information processing apparatus 10 according to the embodiment.

The information processing apparatus 10 includes a reception unit 11, a drawing unit 12, a changing unit 13, and a control unit 14. The functions of these units may be implemented by cooperation of one or more programs installed in the information processing apparatus 10 and the CPU 104 of the information processing apparatus 10.

The reception unit 11 receives an input of a variety of information from a user. The reception unit 11 receives, for example, an operation position instruction (*e*.*g*., a handwriting input operation) for a display object from the user.

The drawing unit 12 performs a drawing on the display object in response to the user's operation position instruction for the display object received by the reception unit 11.

The changing unit 13 changes a display position of the display object in response to a user's move operation for the display object received by the reception unit 11. Further, when a processing mode is a drawing mode, the changing unit 13 changes the processing mode to a move mode of moving a drawing region according to movement of the operation position to a predetermined region with a side that forms the drawing region as a reference while the operation position instruction started in the drawing region is continued. Further, when the continued operation position instruction is completed, the changing unit 13 may return the processing mode to the drawing mode.

The predetermined region may be, for example, a region outside the drawing region. Further, the predetermined region may be a region inside the drawing region and defined within a predetermined distance from the side. The control unit 14 executes various processes of the information processing apparatus 10.

### <Processes>

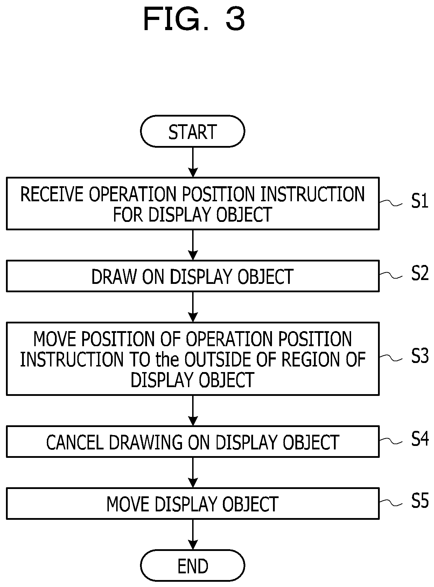

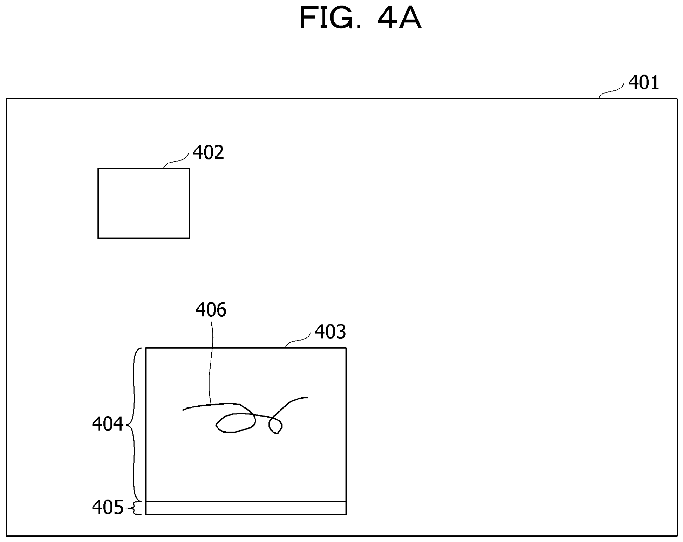

Next, an example of a process executed in the information processing apparatus 10 according to the embodiment will be described with reference to FIGs. 3 to 4D. FIG. 3 is a flowchart illustrating an example of a process executed by the information processing apparatus 10 according to the embodiment. FIGs. 4A to 4D are diagrams illustrating a process executed in the information processing apparatus 10 according to the embodiment.

In step S1, the reception unit 11 receives an operation position instruction for a display object from a user. Here, the reception unit 11 receives the operation position instruction for the display object on a display screen from the user using a pointing device such as a touch panel, a mouse, or the like.

Subsequently, the drawing unit 12 performs a drawing on the display object in response to the user's operation position instruction (step S2). Here, the drawing unit 12 may display, for example, a pixel at a position where the operation position instruction in the display object is received, with a predetermined color that is designated in advance by the user. Thus, for example, when the user re-traces on the display object such as a sticky note, a canvas, a window, or the like with a finger or a pen, a re-traced trajectory is displayed in a predetermined color, so that the user may input characters, figures, or the like by handwriting.

Subsequently, the changing unit 13 detects that the position of the operation position instruction by the user (the position designated by the operation position instruction) is moved from the inside of the region of the display object to the outside of the region of the display object while the operation position instruction is continued (step S3). Here, when the reception unit 11 receives the operation position instruction from a touch panel, the changing unit 13 may detect, for example, that a contact position is moved from the inside of the display object to the outside of the display object while the user's finger or pen keeps contacting (re-tracing) the screen.

In addition, when the reception unit 11 receives the operation position instruction from a mouse, the changing unit 13 may detect, for example, that a position of a cursor is moved from the inside of the display object to the outside of the display object while continuing the left click and the like.

Subsequently, the changing unit 13 cancels the drawing on the display object by the operation position instruction (step S4). Here, in an operation of contacting the finger or the like on the screen, moving the contact position while the contact is continued (while re-tracing the screen), and releasing the finger or the like from the screen (hereinafter, referred to as a "series of operation position instructions"), the changing unit 13 cancels the drawing by the series of operation position instructions when the contact position of the finger or the like is moved from the inside of the display object to the outside of the display object. The fact that the contact position has moved to the outside of the display object may be regarded as an indication that the continuous operation position instruction of the user is not for the purpose of drawing but for the purpose of moving the display object. At this time, since the trajectory drawn up to that point is unnecessary for the user, it is regarded to be canceled at this timing or a timing when the operation position instruction is completed (when the finger or the like leaves the touch panel or the left click of the mouse ends). Further, as a result, for example, when the display object is set to the drawing mode in which the drawing may be performed in the region inside the display object, the drawing according to the move operation by the user who misrecognizes the display object being set to the move mode may also be canceled.

In this case, the changing unit 13 may record, for example, information displayed on the display object when a series of operation position instructions is started, as an image or the like. Then, in the case of canceling the drawing by the series of operation position instructions, the changing unit 13 may return to the display content before the series of operation position instructions is performed, by displaying the image or the like recorded in the region of the display object when the series of operation position instructions is started.

Alternatively, the drawing unit 12 performs a drawing by a series of operation position instructions on a transparent object that is superimposed on the display object, and when the series of operation position instructions is completed, performs a drawing by synthesizing the drawing on the transparent object on the display object. Then, when canceling the drawing by the series of operation position instructions, the changing unit 13 may erase the transparent object without synthesizing the drawing on the transparent object on the display object.

Subsequently, the changing unit 13 changes (moves) the display position of the display object (step S5) and ends the process.

In the example of FIG. 4A, the control unit 14 displays a second display object 402 and a first display object 403 on a display screen 401. In the example of FIG. 4A, the second display object 402 is a display object set in the move mode in which a display position may be moved by a predetermined move operation. The predetermined move operation is, for example, a swipe that is an operation of sliding a finger while touching the screen, a flick that is an operation of sliding the finger as if flipping the screen and then releasing the finger from the screen, a drag that is an operation of moving a cursor while pressing a mouse button, or the like.

The first display object 403 is a display object that is set to the drawing mode when a user gives a predetermined operation position instruction. In the example of FIG. 4A, a line 406 is drawn by handwriting in a drawable region 404 of the first display object 403.

The control unit 14 may move the position of the first display object 403 set to the drawing mode when the user performs a predetermined move operation on a region 405 (bar or handle) of the first display object 403. Since the region 405 of the first display object 403 is not essential, the region 405 may not be displayed.

When the user performs a predetermined operation such as tapping or double-clicking on the display object set to the move mode, the control unit 14 may enlarge the display object and change the display object to the drawing mode. Thus, for example, the handwriting input operation when drawing on the display object may be performed more easily.

When the user performs a predetermined operation such as tapping or double-clicking on the display object set to the drawing mode, the control unit 14 may reduce the display object and change the display object to the move mode. Thus, for example, sticky notes and the like for which handwriting input has been completed may be arranged more easily.

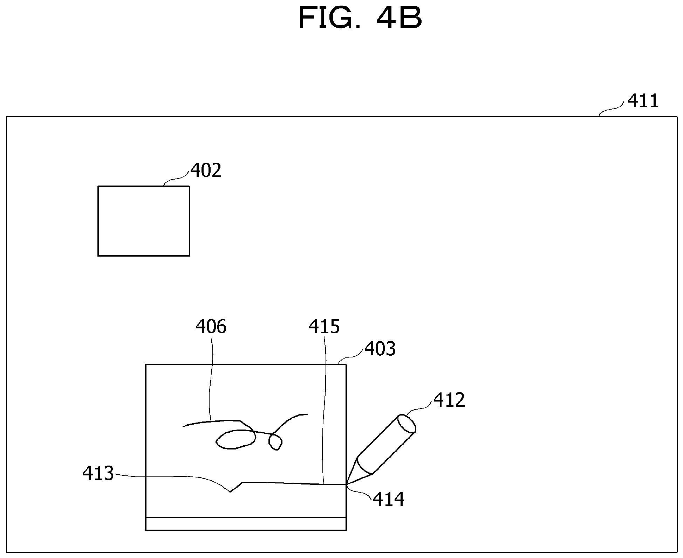

An example of a display screen 411 of FIG. 4B represents that, in the display screen 401 of FIG. 4A, the operation position instruction by a pen-type device 412 is started at a position 413 in the region of the first display object 403, and the position of the operation position instruction by the pen-type device 412 has been moved to a position 414 at the end of the first display object 403 while the operation position instruction is continued. Therefore, the trajectory (handwriting) of the position of the operation position instruction by the pen-type device 412 from the position 413 to the position 414 is drawn by a line 415.

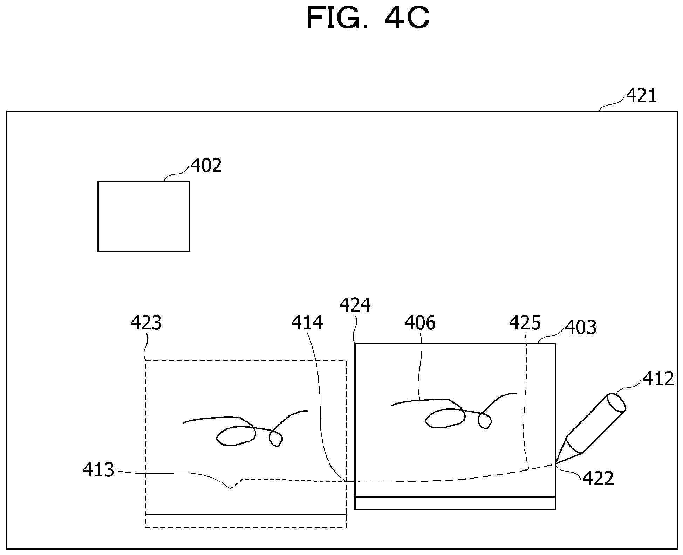

In an example of a display screen 421 of FIG. 4C, in the display screen 411 of FIG. 4B, the position of the operation position instruction is moved to a position 422 outside the region of the first display object 403 through a trajectory 425 after deviating from the position 414 (an example of a "position deviated from a region") of the region of the first display object 403 while the operation position instruction is continued.

Therefore, the line 415 drawn by the operation position instruction is deleted by the process of step S4 in FIG. 3. Further, the display position of the first display object 403 has been changed by the process of step S5 in FIG. 3.

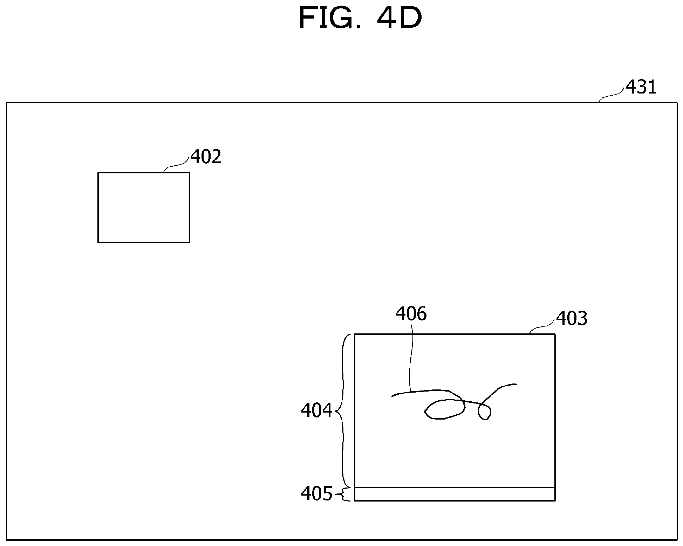

An example of a display screen 431 of FIG. 4D represents an example of a display screen when the operation position instruction by the pen-type device 412 is completed at the position 422 of the display screen 421 of FIG. 4C.

In the examples of FIGs. 4C and 4D, the changing unit 13 moves the first display object 403 so that the position 414 deviated from the region of the first display object 403 becomes the position 422 of the operation position instruction by the pen-type device 412. Therefore, the upper left end of the first display object 403 has been moved from a position 423 to a position 424. The distance and the direction (vector) from the position 423 to the position 424 are the same as the distance and the direction from the position 414 to the position 422, respectively. As a result, the user may move the display object with an operation feeling of pulling the display object according to the operation position instruction.

In addition, the changing unit 13 may move the first display object 403 so that the position 413 of the first display object 403 at which the operation position instruction is started becomes the position 422 of the operation position instruction by the pen-type device 412. Thus, for example, when the user performs the move operation on the display object, even when the display object is in the drawing mode, the display object may be moved to the same position as in the case where the display object is in the move mode.

Further, the changing unit 13 may move the first display object 403 so that a predetermined position in the region of the first display object 403 becomes the position 422 of the operation position instruction by the pen-type device 412. Thus, for example, the user may recognize that the display object in the drawing mode is being moved. In this case, the predetermined position may be, for example, the central portion (center position) of the first display object 403, the position of the upper left corner of the first display object 403, or the like.

### <Determination on whether display position may be changed>

In the process of step S3 in FIG. 3, only when the position of the operation position instruction by the user is moved from the inside of the region of the display object to the outside of the region of the display object while the operation position instruction is continued, and satisfies a predetermined condition, the changing unit 13 may execute processes after step S4. Thus, for example, it is possible to prevent the drawing from being canceled due to an erroneous operation such as slight displacement of the position of the operation position instruction from the region of the display object during the operation position instruction.

In this case, when the distance (straight line distance) from the position 414 deviated from the region of the first display object 403 to the position 422 at which the operation position instruction is completed is equal to or larger than a threshold value (*e.g.,* a length on the pixel coordinate corresponding to 5cm on the screen), the changing unit 13 may determine that the position of the operation position instruction has moved to the outside of the region of the first display object 403.

Alternatively, when the length of the trajectory 425 in which the position of the operation position instruction is moved from the position 414 to the position 422 is equal to or larger than a threshold value (*e.g.,* a length on the pixel coordinate corresponding to 10cm on the screen), the changing unit 13 may determine that the position of the operation position instruction has moved to the outside of the region of the first display object 403.

Further, when the time required for the position of the operation position instruction to move from the position 414 to the position 422 is equal to or longer than a threshold value (*e.g.,* 1 second), the changing unit 13 may determine that the position of the operation position instruction has moved to the outside of the region of the first display object 403.

Further, when the value of the ratio between the distance (straight line distance) from the position 414 to the position 422 and the distance (straight line distance) from the position 413 at which the operation position instruction is started in the region of the first display object 403 to the position 414 is equal to or larger than a threshold value (*e.g.,* 1), the changing unit 13 may determine that the position of the operation position instruction has moved to the outside of the region of the first display object 403. This is because, for example, when the amount of movement of a position designated by the continued operation position instruction outside the drawing region or the like is equal to or larger than a certain amount with respect to the amount of movement inside the drawing region or the like, it may be considered that the user has the intention to move the first display object 403.

Further, when the value of the ratio between the length of the trajectory 425 of the position of the operation position instruction from the position 414 to the position 422 and the length of the trajectory (the line 415) of the position of the operation position instruction from the position 413 to the position 414 is equal to or larger than a threshold value (*e.g.,* 1), the changing unit 13 may determine that the position of the operation position instruction has moved to the outside of the region of the first display object 403.

Further, when the value of the time until the position of the operation position instruction is moved from the position 414 to the position 422 and the value of the time until the position of the operation position instruction is moved from the position 413 to the position 414 is equal to or larger than a threshold value (*e.g.,* 1), the changing unit 13 may determine that the position of the operation position instruction has moved to the outside of the region of the first display object 403.

### <Cancellation of Change of Display Position>

The changing unit 13 may change the position of the display object by the process of steps S3 to S5 in FIG. 3 and then return the position of the display object to its original position in response to a predetermined operation from the user. Accordingly, for example, when the drawing position deviates from the region of the display object due to an erroneous operation by the user, the position of the display object may be returned to its original position (the position before the change).

In this case, for example, when the position designated by the operation position instruction stays at the position 422 as illustrated in FIG. 4C for a predetermined time (*e.g.,* 3 seconds) while the operation position instruction is continued, the changing unit 13 may return the display object to the position of the first display object 403 of FIG. 4B.

Further, for example, when the position designated by the operation position instruction is moved in a direction from the position 422 to the position 413 while the operation position instruction is continued, as illustrated in FIG. 4C, the changing unit 13 may return the display object to the position of the first display object 403 of FIG. 4B. In this case, for example, when the user flicks the first display object 403 in a direction of the original position of the display object, the changing unit 13 may return the first display object 403 to its original position. In addition, for example, when the user swipes or drags the first display object 403 within a predetermined range from the original display position (*e*.*g.*, when a distance from the original position is within a threshold value), the changing unit 13 may return the first display object 403 to its original position. As a result, for example, the user may return the first display object 403 to its original position by an operation of returning to a position substantially close to the original position.

Further, when the position of the display object is returned to its original position, the changing unit 13 may display the line 415 of FIG. 4B again by restoring the drawing canceled in the process of step S4 in FIG. 3.

Further, when the position of the display object is returned to its original position, the changing unit 13 may return the position of the display object to its original position only when a confirmation dialog is displayed and an approval operation to approve that the user returns to the original position is received (*e*.*g*., a "Yes" button on the dialog is pressed). Further, when the approval operation is not received for a predetermined time (*e.g.,* 3 seconds), the changing unit 13 may erase the dialog and not return the position of the display object to its original position.

### <Effects of the Embodiment>

According to the disclosed technique, the display position of the display object is changed according to the movement of the position designated by the operation position instruction from the inside of the region of the display object to the outside thereof. As a result, the user may perform both the drawing on the display object and the movement of the display object without explicitly performing a switching operation between the drawing mode and the move mode.

In addition, it may also be considered that the first display object may be moved by performing the move operation such as a swipe or the like on a predetermined portion (*e.g.,* a bar, etc.) of the first display object set to the drawing mode. In this case, when the first display object and the second display object are displayed at the same time and the second display object is displayed on the bar or the like of the first display object, the user fails to recognize that the first display object is in the drawing mode. Therefore, the user may misrecognize that the first display object is set to the move mode, and perform an operation such as dragging or the like on a drawable region of the first display object in order to move the first display object. In this case, the first display object is not moved, and drawing is erroneously input to the first display object.

In addition, it may be considered that the operation position of a swipe or the like for the bar or the like of the first display object set in the drawing mode is incorrectly swiped or the like by designating a drawable region near the bar or the like in the first display object. Even in this case, the first display object is not moved, and drawing is erroneously input to the first display object.

According to the disclosed technique, even when the second display object is displayed on the bar or the like of the first display object or even when the operation position such as the swipe or the like on the bar or the like is incorrect, the user may perform both the drawing on the display object and the movement of the display object without explicitly performing a switching operation between the drawing mode and the move mode.

### <Modifications>

Each functional unit of the information processing apparatus 10 may be implemented by, for example, a cloud computing including one or more computers.

## Claims

1. A display control program that causes a computer to execute a process, the process comprising, when a processing mode is a drawing mode;
receiving (S1) an operation position instruction started in a drawing region (404) of a display object (403); and
changing the processing mode to a move mode of moving (S5) the display object according to movement of an operation position indicated by the operation position instruction to a predetermined region with a side that forms the drawing region as a reference while the operation position instruction is continued,
**characterized by**
changing the processing mode to the move mode according to satisfying at least one of:
a condition related to a value of a ratio between the straight line distance by which the operation position is moved after the processing mode is changed to the move mode and a straight line distance by which the operation position is moved from a start of the operation position instruction to the change of the processing mode to the move mode;
a condition related to a value of a ratio between the length of the trajectory by which the operation position is moved after the processing mode is changed to the move mode and a length of a trajectory from the start of the operation position instruction to the change of the processing mode to the move mode; and
a condition related to a value of a ratio between the elapsed time after the processing mode is changed to the move mode and an elapsed time from the start of the operation position instruction to the change of the processing mode to the move mode.

2. The display control program according to claim 1, wherein
the predetermined region is a region outside the drawing region (404).

3. The display control program according to claim 1, wherein
the predetermined region (405) is a region inside the drawing region (404) and is defined within a predetermined distance from the side.

4. The display control program according to any one of claims 1 to 3, the process further comprising:
cancelling a drawing (415) executed with the movement of the operation position according to the change of the processing mode to the move mode.

5. The display control program according to any one of claims 1 to 4, the process further comprising:
changing the processing mode to the move mode according to further satisfying at least one of:
a condition related to a straight line distance by which the operation position is moved after the processing mode is changed to the move mode;
a condition related to a length of a trajectory by which the operation position is moved after the processing mode is changed to the move mode; and
a condition related to an elapsed time after the processing mode is changed to the move mode.

6. The display control program according to any one of claims 1 to 5, the process further comprising:
after the processing mode is changed to the move mode, when a position of the display object is moved within a predetermined range from a display position of the display object before the processing mode is changed while the operation position instruction is continued, returning the display position of the display object to a position before changing the processing mode.

7. The display control program according to any one of claims 1 to 6, the process further comprising:
in the move mode, determining a display position of the drawing region based on the operation position indicated by the operation position instruction.

8. The display control program according to any one of claims 1 to 7, wherein the display object (403) is moved so that a position (413) of the display object at which the operation position instruction is started becomes a position (422) where the operation position instruction is completed.

9. A display control method, comprising, when a processing mode is a drawing mode:
receiving (S1), by the computer, an operation position instruction started in a drawing region (404) of a display object; and
changing the processing mode to a move mode of moving the display object according to movement of an operation position indicated by the operation position instruction to a predetermined region with a side that forms the drawing region as a reference while the operation position instruction is continued,
**characterized by** changing the processing mode to the move mode according to satisfying at least one of:
a condition related to a value of a ratio between the straight line distance by which the operation position is moved after the processing mode is changed to the move mode and a straight line distance by which the operation position is moved from a start of the operation position instruction to the change of the processing mode to the move mode;
a condition related to a value of a ratio between the length of the trajectory by which the operation position is moved after the processing mode is changed to the move mode and a length of a trajectory from the start of the operation position instruction to the change of the processing mode to the move mode; and
a condition related to a value of a ratio between the elapsed time after the processing mode is changed to the move mode and an elapsed time from the start of the operation position instruction to the change of the processing mode to the move mode.

10. A display controller, comprising:
a reception unit (11) configured to, when a processing mode is a drawing mode, receive an operation position instruction started in a drawing region (404) of a display object; and
a changing unit (13) configured to change the processing mode to a move mode of moving the display object according to movement of an operation position indicated by the operation position instruction to a predetermined region with a side that forms the drawing region as a reference while the operation position instruction is continued,
**characterized by** changing the processing mode to the move mode according to satisfying at least one of:
a condition related to a value of a ratio between the straight line distance by which the operation position is moved after the processing mode is changed to the move mode and a straight line distance by which the operation position is moved from a start of the operation position instruction to the change of the processing mode to the move mode;
a condition related to a value of a ratio between the length of the trajectory by which the operation position is moved after the processing mode is changed to the move mode and a length of a trajectory from the start of the operation position instruction to the change of the processing mode to the move mode; and
a condition related to a value of a ratio between the elapsed time after the processing mode is changed to the move mode and an elapsed time from the start of the operation position instruction to the change of the processing mode to the move mode.

## Patentansprüche

1. Anzeigesteuerprogramm, das einen Computer veranlasst, einen Vorgang auszuführen, wobei der Vorgang, wenn ein Verarbeitungsmodus ein Zeichenmodus ist, umfasst:
Empfangen (S1) einer Bedienpositionsanweisung, die in einem Zeichenbereich (404) eines Anzeigeobjekts (403) gestartet wird; und
Ändern des Verarbeitungsmodus zu einem Verschiebemodus des Bewegens (S5) des Anzeigeobjekts entsprechend einer Bewegung einer durch die Bedienpositionsanweisung angegebenen Bedienposition zu einem vorbestimmten Bereich mit einer den Zeichenbereich bildenden Kante als Bezug, während die Bedienpositionsanweisung fortgesetzt wird,
**dadurch gekennzeichnet, dass** der Verarbeitungsmodus zu dem Verschiebemodus gemäß dem Erfüllen mindestens einer der folgenden Bedingungen geändert wird:
eine Bedingung in Bezug auf einen Wert eines Verhältnisses zwischen dem geradlinigen Abstand, um den die Bedienposition bewegt wird, nachdem der Verarbeitungsmodus zu dem Verschiebemodus geändert worden ist, und einem geradlinigen Abstand, um den die Bedienposition von einem Start der Bedienpositionsanweisung bis zu der Änderung des Verarbeitungsmodus zu dem Verschiebemodus bewegt wird;
eine Bedingung in Bezug auf einen Wert eines Verhältnisses zwischen der Länge der Trajektorie, um die die Bedienposition bewegt wird, nachdem der Verarbeitungsmodus zu dem Verschiebemodus geändert worden ist, und einer Länge einer Trajektorie von dem Start der Bedienpositionsanweisung bis zu der Änderung des Verarbeitungsmodus zu dem Verschiebemodus; und
eine Bedingung in Bezug auf einen Wert eines Verhältnisses zwischen der verstrichenen Zeit, nachdem der Verarbeitungsmodus zu dem Verschiebemodus geändert worden ist, und einer verstrichenen Zeit von dem Start der Bedienpositionsanweisung bis zu der Änderung des Verarbeitungsmodus zu dem Verschiebemodus.

2. Anzeigesteuerprogramm nach Anspruch 1, wobei
der vorbestimmte Bereich ein Bereich außerhalb des Zeichenbereichs (404) ist.

3. Anzeigesteuerprogramm nach Anspruch 1, wobei
der vorbestimmte Bereich (405) ein Bereich innerhalb des Zeichenbereichs (404) ist und innerhalb eines vorbestimmten Abstands von der Kante definiert ist.

4. Anzeigesteuerprogramm nach einem der Ansprüche 1 bis 3, wobei der Vorgang weiter umfasst:
Aufheben einer Zeichnung (415), das gemäß der Änderung des Verarbeitungsmodus zu dem Verschiebemodus mit der Bewegung der Bedienposition ausgeführt wird.

5. Anzeigesteuerprogramm nach einem der Ansprüche 1 bis 4, wobei der Vorgang weiter umfasst:
Ändern des Verarbeitungsmodus zu dem Verschiebemodus gemäß weiterem Erfüllen mindestens einer der folgenden Bedingungen:
eine Bedingung in Bezug auf einen geradlinigen Abstand, um den die Bedienposition bewegt wird, nachdem der Verarbeitungsmodus zu dem Verschiebemodus geändert worden ist;
eine Bedingung in Bezug auf eine Länge einer Trajektorie, um die die Bedienposition bewegt wird, nachdem der Verarbeitungsmodus zu dem Verschiebemodus geändert worden ist; und
eine Bedingung in Bezug auf eine verstrichene Zeit, nachdem der Verarbeitungsmodus zu dem Verschiebemodus geändert worden ist.

6. Anzeigesteuerprogramm nach einem der Ansprüche 1 bis 5, wobei der Vorgang weiter umfasst:
Zurückführen der Anzeigeposition des Anzeigeobjekts auf eine Position vor dem Ändern des Verarbeitungsmodus, nachdem der Verarbeitungsmodus zu dem Verschiebemodus geändert worden ist, wenn eine Position des Anzeigeobjekts innerhalb eines vorbestimmten Bereichs von einer Anzeigeposition des Anzeigeobjekts vor der Änderung des Verarbeitungsmodus bewegt wird, während die Bedienpositionsanweisung fortgesetzt wird.

7. Anzeigesteuerprogramm nach einem der Ansprüche 1 bis 6, wobei der Vorgang weiter umfasst:
Bestimmen einer Anzeigeposition des Zeichenbereichs in dem Verschiebemodus auf der Grundlage der durch die Bedienpositionsanweisung angegebenen Bedienposition.

8. Anzeigesteuerprogramm nach einem der Ansprüche 1 bis 7, wobei das Anzeigeobjekt (403) so bewegt wird, dass eine Position (413) des Anzeigeobjekts, an der die Bedienpositionsanweisung gestartet wird, zu einer Position (422) wird, an der die Bedienpositionsanweisung abgeschlossen wird.

9. Anzeigesteuerverfahren, umfassend, wenn ein Verarbeitungsmodus ein Zeichenmodus ist:
Empfangen (S1), durch den Computer, einer Bedienpositionsanweisung, die in einem Zeichenbereich (404) eines Anzeigeobjekts gestartet wird; und
Ändern des Verarbeitungsmodus zu einem Verschiebemodus des Bewegens des Anzeigeobjekts entsprechend einer Bewegung einer durch die Bedienpositionsanweisung angegebenen Bedienposition zu einem vorbestimmten Bereich mit einer den Zeichenbereich bildenden Kante als Bezug, während die Bedienpositionsanweisung fortgesetzt wird,
**dadurch gekennzeichnet, dass**
der Verarbeitungsmodus zu dem Verschiebemodus gemäß dem Erfüllen mindestens einer der folgenden Bedingungen geändert wird:
eine Bedingung in Bezug auf einen Wert eines Verhältnisses zwischen dem geradlinigen Abstand, um den die Bedienposition bewegt wird, nachdem der Verarbeitungsmodus zu dem Verschiebemodus geändert worden ist, und einem geradlinigen Abstand, um den die Bedienposition von einem Start der Bedienpositionsanweisung bis zu der Änderung des Verarbeitungsmodus zu dem Verschiebemodus bewegt wird;
eine Bedingung in Bezug auf einen Wert eines Verhältnisses zwischen der Länge der Trajektorie, um die die Bedienposition bewegt wird, nachdem der Verarbeitungsmodus zu dem Verschiebemodus geändert worden ist, und einer Länge einer Trajektorie von dem Start der Bedienpositionsanweisung bis zu der Änderung des Verarbeitungsmodus zu dem Verschiebemodus; und
eine Bedingung in Bezug auf einen Wert eines Verhältnisses zwischen der verstrichenen Zeit, nachdem der Verarbeitungsmodus zu dem Verschiebemodus geändert worden ist, und einer verstrichenen Zeit von dem Start der Bedienpositionsanweisung bis zu der Änderung des Verarbeitungsmodus zu dem Verschiebemodus.

10. Anzeigesteuereinheit, umfassend:
eine Empfangseinheit (11), die dazu ausgebildet ist, wenn ein Verarbeitungsmodus ein Zeichenmodus ist, eine Bedienpositionsanweisung zu empfangen, die in einem Zeichenbereich (404) eines Anzeigeobjekts gestartet wird; und
eine Änderungseinheit (13), die dazu ausgebildet ist, den Verarbeitungsmodus zu einem Verschiebemodus des Bewegens des Anzeigeobjekts entsprechend einer Bewegung einer durch die Bedienpositionsanweisung angegebenen Bedienposition zu einem vorbestimmten Bereich mit einer den Zeichenbereich bildenden Kante als Bezug zu ändern, während die Bedienpositionsanweisung fortgesetzt wird,
**dadurch gekennzeichnet, dass** der Verarbeitungsmodus zu dem Verschiebemodus gemäß dem Erfüllen mindestens einer der folgenden Bedingungen geändert wird:
eine Bedingung in Bezug auf einen Wert eines Verhältnisses zwischen dem geradlinigen Abstand, um den die Bedienposition bewegt wird, nachdem der Verarbeitungsmodus zu dem Verschiebemodus geändert worden ist, und einem geradlinigen Abstand, um den die Bedienposition von einem Start der Bedienpositionsanweisung bis zu der Änderung des Verarbeitungsmodus zu dem Verschiebemodus bewegt wird;
eine Bedingung in Bezug auf einen Wert eines Verhältnisses zwischen der Länge der Trajektorie, um die die Bedienposition bewegt wird, nachdem der Verarbeitungsmodus zu dem Verschiebemodus geändert worden ist, und einer Länge einer Trajektorie von dem Start der Bedienpositionsanweisung bis zu der Änderung des Verarbeitungsmodus zu dem Verschiebemodus; und
eine Bedingung in Bezug auf einen Wert eines Verhältnisses zwischen der verstrichenen Zeit, nachdem der Verarbeitungsmodus zu dem Verschiebemodus geändert worden ist, und einer verstrichenen Zeit von dem Start der Bedienpositionsanweisung bis zu der Änderung des Verarbeitungsmodus zu dem Verschiebemodus.

## Revendications

1. Programme de commande d'affichage qui amène un ordinateur à exécuter un processus, le processus comprenant, lorsqu'un mode de traitement est un mode de dessin :
la réception (S1) d'une instruction de position d'opération commencée dans une région (404) de dessin d'un objet (403) d'affichage ; et
le changement du mode de traitement en un mode de déplacement consistant en le déplacement (S5) de l'objet d'affichage en fonction d'un déplacement d'une position d'opération indiquée par l'instruction de position d'opération vers une région prédéterminée avec un côté qui forme la région de dessin en tant qu'une référence tandis que l'instruction de position d'opération est poursuivie,
**caractérisé par** le changement du mode de traitement en le mode de déplacement en fonction de la satisfaction d'au moins une des conditions suivantes :
une condition liée à une valeur d'un rapport entre la distance en ligne droite dont la position d'opération est déplacée après que le mode de traitement est changé en le mode de déplacement et une distance en ligne droite dont la position d'opération est déplacée depuis un début de l'instruction de position d'opération jusqu'au changement du mode de traitement en le mode de déplacement ;
une condition liée à une valeur d'un rapport entre la longueur de la trajectoire dont la position d'opération est déplacée après que le mode de traitement est changé en le mode de déplacement et une longueur d'une trajectoire depuis le début de l'instruction de position d'opération jusqu'au changement du mode de traitement en le mode de déplacement ; et
une condition liée à une valeur d'un rapport entre le temps écoulé après que le mode de traitement est changé en le mode de déplacement et un temps écoulé depuis le début de l'instruction de position d'opération jusqu'au changement du mode de traitement en le mode de déplacement.

2. Programme de commande d'affichage selon la revendication 1, dans lequel la région prédéterminée est une région à l'extérieur de la région (404) de dessin.

3. Programme de commande d'affichage selon la revendication 1,
dans lequel la région (405) prédéterminée est une région à l'intérieur de la région (404) de dessin et est définie à une distance prédéterminée à partir du côté.

4. Programme de commande d'affichage selon l'une quelconque des revendications 1 à 3, le processus comprenant en outre :
l'annulation d'un dessin (415) exécuté avec le déplacement de la position d'opération en fonction du changement du mode de traitement en le mode de déplacement.

5. Programme de commande d'affichage selon l'une quelconque des revendications 1 à 4, le processus comprenant en outre :
le changement du mode de traitement en le mode de déplacement en fonction de la satisfaction en outre d'au moins une des conditions suivantes :
une condition liée à une distance en ligne droite dont la position d'opération est déplacée après que le mode de traitement est changé en le mode de déplacement ;
une condition liée à une longueur d'une trajectoire dont la position d'opération est déplacée après que le mode de traitement est changé en le mode de déplacement ; et
une condition liée à un temps écoulé après que le mode de traitement est changé en le mode de déplacement.

6. Programme de commande d'affichage selon l'une quelconque des revendications 1 à 5, le processus comprenant en outre :
après que le mode de traitement est changé en le mode de déplacement, lorsqu'une position de l'objet d'affichage est déplacée dans une plage prédéterminée à partir d'une position d'affichage de l'objet d'affichage avant que le mode de traitement ne soit changé tandis que l'instruction de position d'opération est poursuivie, le retour de la position d'affichage de l'objet d'affichage à une position avant le changement du mode de traitement.

7. Programme de commande d'affichage selon l'une quelconque des revendications 1 à 6, le processus comprenant en outre :
dans le mode de déplacement, la détermination d'une position d'affichage de la région de dessin sur la base de la position d'opération indiquée par l'instruction de position d'opération.

8. Programme de commande d'affichage selon l'une quelconque des revendications 1 à 7, dans lequel l'objet (403) d'affichage est déplacé de telle sorte qu'une position (413) de l'objet d'affichage au niveau de laquelle l'instruction de position d'opération est commencée devient une position (422) où l'instruction de position d'opération est achevée.

9. Procédé de commande d'affichage, comprenant, lorsqu'un mode de traitement est un mode de dessin :
la réception (S1), par l'ordinateur, d'une instruction de position d'opération commencée dans une région (404) de dessin d'un objet d'affichage ; et
le changement du mode de traitement en un mode de déplacement consistant en le déplacement de l'objet d'affichage en fonction d'un déplacement d'une position d'opération indiquée par l'instruction de position d'opération vers une région prédéterminée avec un côté qui forme la région de dessin en tant qu'une référence tandis que l'instruction de position d'opération est poursuivie,
**caractérisé par**
le changement du mode de traitement en le mode de déplacement en fonction de la satisfaction d'au moins une des conditions suivantes :
une condition liée à une valeur d'un rapport entre la distance en ligne droite dont la position d'opération est déplacée après que le mode de traitement est changé en le mode de déplacement et une distance en ligne droite dont la position d'opération est déplacée depuis un début de l'instruction de position d'opération jusqu'au changement du mode de traitement en le mode de déplacement ;
une condition liée à une valeur d'un rapport entre la longueur de la trajectoire dont la position d'opération est déplacée après que le mode de traitement est changé en le mode de déplacement et une longueur d'une trajectoire depuis le début de l'instruction de position d'opération jusqu'au changement du mode de traitement en le mode de déplacement ; et
une condition liée à une valeur d'un rapport entre le temps écoulé après que le mode de traitement est changé en le mode de déplacement et un temps écoulé depuis le début de l'instruction de position d'opération jusqu'au changement du mode de traitement en le mode de déplacement.

10. Organe de commande, comprenant :
une unité (11) de réception configurée pour, lorsqu'un mode de traitement est un mode de dessin, recevoir une instruction de position d'opération commencée dans une région (404) de dessin d'un objet d'affichage ; et
une unité (13) de changement configurée pour changer le mode de traitement en un mode de déplacement consistant en le déplacement de l'objet d'affichage en fonction d'un déplacement d'une position d'opération indiquée par l'instruction de position d'opération vers une région prédéterminée avec un côté qui forme la région de dessin en tant qu'une référence tandis que l'instruction de position d'opération est poursuivie,
**caractérisé par** le changement du mode de traitement en le mode de déplacement en fonction de la satisfaction d'au moins une des conditions suivantes :
une condition liée à une valeur d'un rapport entre la distance en ligne droite dont la position d'opération est déplacée après que le mode de traitement est changé en le mode de déplacement et une distance en ligne droite dont la position d'opération est déplacée depuis un début de l'instruction de position d'opération jusqu'au changement du mode de traitement en le mode de déplacement ;
une condition liée à une valeur d'un rapport entre la longueur de la trajectoire dont la position d'opération est déplacée après que le mode de traitement est changé en le mode de déplacement et une longueur d'une trajectoire depuis le début de l'instruction de position d'opération jusqu'au changement du mode de traitement en le mode de déplacement ; et
une condition liée à une valeur d'un rapport entre le temps écoulé après que le mode de traitement est changé en le mode de déplacement et un temps écoulé depuis le début de l'instruction de position d'opération jusqu'au changement du mode de traitement en le mode de déplacement.
